# FASCICULE DE BREVET EUROPEEN

(11) **EP 0 406 362 B1**
(45) Date de publication et mention de la délivrance du brevet: **14.06.1995**
(21) Numéro de dépôt: 90900207.3
(22) Date de dépôt: 15.12.1989
(51) Int. Cl.: G11B 5/127, G11B 5/187, G11B 5/31

(54) **PROCEDE DE REALISATION D'UNE TETE MAGNETIQUE D'ENREGISTREMENT LECTURE ET TETE MAGNETIQUE OBTENUE PAR CE PROCEDE**
HERSTELLUNGSVERFAHREN EINES AUFNAHME-/WIEDERGABEKOPFES UND NACH DIESEM VERFAHREN ERHALTENER KOPF
PROCESS FOR PRODUCING A READING/RECORDING MAGNETIC HEAD AND MAGNETIC HEAD OBTAINED THEREBY

(30) Priorité: 23.12.1988 FR 8817083
(43) Date de publication de la demande: 09.01.1991
(73) Titulaire: THOMSON-CSF, 75008 Paris (FR)
(72) Inventeur: MEUNIER, Paul-Louis, F-75012 Paris (FR); COUTELLIER, Jean-Marc, F-78310 Maurepas (FR)
(74) Mandataire: Chaverneff, Vladimir
(86) Numéro de dépôt international: FR8900657
(87) Numéro de publication internationale: WO9007772

(56) Documents cités:
- EP-A- 0 032 230
- DE-A- 1 948 215
- FR-A- 1 293 374
- GB-A- 0 727 234
- JP-A- 6 139 207
- JP-A-60 107 712
- US-A- 2 647 031
- US-A- 3 613 228
- IBM TECHNICAL DISCLOSURE BULLETIN vol. 11, no. 11, avril 1969, ARMONK,N.Y.,USpage 1595 J.M. BROWNLOW ET AL.: "BATCH-FABRICATED MAGNETIC HEAD" voir ledocument en entier

## Description

L'invention concerne un procédé de réalisation d'une tête magnétique d'enregistrement-lecture et notamment une tête magnétique réalisée en couches minces ou plus précisément les têtes planaires en couches minces.

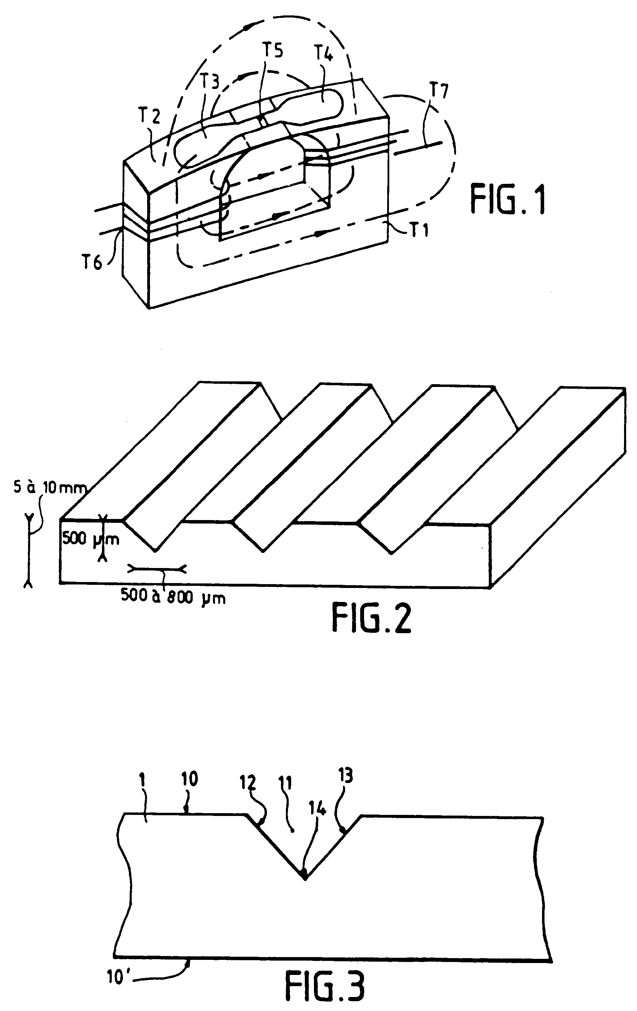

Une tête magnétique de type planaire possédant des pôles magnétiques réalisés en couches minces comporte comme cela est représenté en figure 1 un circuit magnétique T1 en ferrite, par exemple, possédant une face T2 portant deux pôles magnétiques T3 et T4 en couches minces séparés par un entrefer T5. Des bobinages T6 et T7 entourent le circuit magnétique T1 et permettant d'induire un flux magnétique. A titre d'exemple, sur la figure 1, ont été représentées des lignes de fuites du champ magnétique. Ces fuites importantes ont pour conséquence une perte du signal. L'invention apporte une solution à ce problème et permet donc de réduire les pertes magnétiques.

Il est connu de réaliser un entrefer de tête magnétique en réalisant une encoche dans un matériau magnétique de placer du matériau non magnétique dans cette encoche. Il en est ainsi par exemple dans les documents JP-60 107 712 et JP-61 39207, mais dans ces documents l'encoche est à faces parallèles et ne permet pas de régler avec précision la largeur de l'entrefer.

On connaît également une tête magnétique telle que décrite dans le document EP-A-0 032 230 qui permet de régler la largeur de l'entrefer. L'invention concerne une tête magnétique dans laquelle des couches à bonne perméabilité magnétique recouvrent les flancs d'une encoche en forme de V dont la point du V est usinée de façon à réaliser un entrefer entre les deux couches à bonne perméabilité magnétique. L'invention fournit un perfectionnement au document EP-A-0 032 230 de façon à réaliser une structure de tête magnétique possédant des pôles supplémentaires réalisés sur une structure du type de ce document.

L'invention concerne donc un procédé de réalisation d'un circuit magnétique pour tête magnétique d'enregistrement-lecture caractérisé en ce qu'il comporte les étapes suivantes:
a) réalisation dans un substrat en matériau non magnétique à partir d'une première face du substrat, d'une encoche possédant deux flancs latéraux et un fond;
b) réalisation dans l'encoche d'une couche d'un matériau de bonne perméabilité magnétique recouvrant les deux flancs latéraux et le fond de l'encoche;
c) dépôt d'un matériau amagnétique dans l'encoche;
d) usinage d'une deuxième face du substrat opposée à la première face de façon à atteindre le matériau amagnétique situé dans l'encoche et à créer un entrefer entre les couches de matériau magnétique situées sur les deux flancs latéraux;
e) collage d'un élément en matériau magnétique contre la première face du substrat de telle façon que cet élément de matériau magnétique couple magnétiquement les couches de matériau magnétique situées sur les deux flancs latéraux de l'encoche

caractérisé en ce qu'il comporte également après usinage de la deuxième face du substrat, la réalisation de deux pôles en matériau magnétique en couches minces séparés par un entrefer situé au-dessus de l'entrefer séparant les deux couches de matériau magnétique de bonne perméabilité situées sur les deux flancs latéraux, chaque pôle magnétique étant couplé magnétiquement à une couche en matériau de bonne perméabilité située sur l'un des flancs latéraux.

L'invention concerne également une tête magnétique susceptible d'être réalisée par le procédé ci-dessus et comportant :
- un substrat en matériau non magnétique possédant une fente possédant une ouverture de grande dimension vers une première face du substrat, et une deuxième ouverture de faible largeur vers une deuxième face du substrat, cette fente étant délimitée par deux flancs latéraux ;
- des couches d'un matériau à perméabilité magnétique élevée, recouvrant les deux flancs latéraux et affleurant lesdites première et deuxième faces du substrat de façon notamment à ne recouvrir ni la première ni la deuxième face;
- un matériau non magnétique situé entre les couches de matériau à grande perméabilité magnétique recouvrant les flancs, ce matériau non magnétique affleurant la deuxième face du substrat;
- un élément en matériau magnétique plaqué contre ladite première face et couplant magnétiquement les deux couches de matériau à perméabilité magnétique élevée ;
- au moins un bobinage compris entre le matériau non magnétique et l'élément en matériau magnétique.
- deux pôles magnétiques en couches minces situés sur la deuxième face au-dessus des couches de matériau à perméabilité magnétique élevée, les deux pôles étant séparés par un entrefer et chaque pôle étant couplé magnétiquement à l'une des deux couches de matériau à perméabilité magnétique élevée.

Les différents objets et caractéristiques de l'invention apparaîtront plus clairement dans la description qui va suivre faite à titre d'exemple en se reportant aux figures annexées qui représentent:
- la figure 1, une tête magnétique connue dans la technique déjà décrite précédemment;
- les figures 2 à 11, différentes étapes du procédé de réalisation d'une tête magnétique selon l'invention;
- la figure 12, un exemple de réalisation d'une tête magnétique à couches minces selon l'invention;
- la figure 13, une variante de réalisation d'une tête magnétique à couches minces selon l'invention.

En se reportant aux figures 2 à 11 on va tout d'abord décrire un exemple de réalisation d'un procédé de réalisation selon l'invention.

Au cours d'une première étape, représentée en figures 2 et 3, des encoches telles que 11 sont pratiquées dans un substrat 1 en matériau non magnétique. Cette rainure a par exemple une forme triangulaire délimitée, à partir de la surface 10 du substrat, par deux flancs latéraux 12 et 13 et possède un fond 14.

A titre d'exemple, dans une épaisseur de substrat de 5 à 10mm, on prévoiera des encoches d'environ 500 micromètres de profondeur et de 500 à 800 micromètres de largeur.

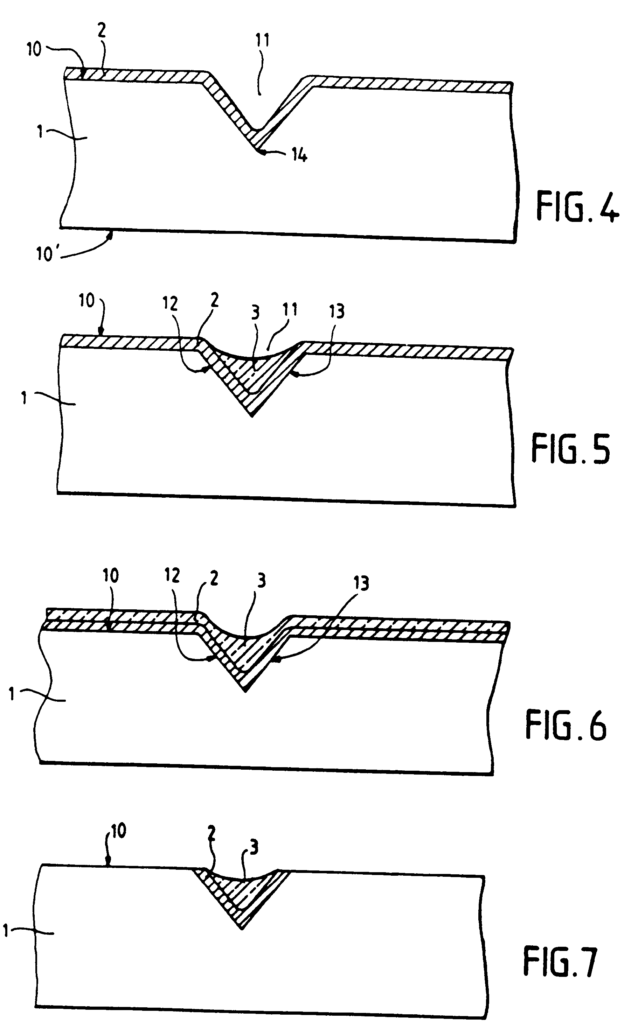

Au cours d'une deuxième étape représentée en figure 4, la face 10 et les flancs 12 et 13 de l'encoche 11 sont revêtus d'une couche 2 d'un matériau présentant de bonnes caractéristiques magnétiques (perméabilité magnétique élevée, coefficient de coercivité faible, coefficient de saturation élevée). Cette couche 2 aura par exemple 10 à 50 micromètres d'épaisseur. Le matériau utilisé peut être un matériau tel qu'un alliage à base de fer d'aluminium et de silicium désigné sous le nom de Sendust. Son mode de dépôt préférentiel est une pulvérisation cathodique (sputtering).

La couche 2 peut également être réalisée sous une forme feuilletée, c'est-à-dire sous la forme d'une alternance de couches d'un matériau magnétique présentant une structure cristalline déterminée, dite colonnaire (les molécules étant agencées en colonnes) et de couches d'un matériau magnétique ou non, de structure cristallographique différente.

Au cours d'une troisième étape, on dépose, dans chaque rainure 11, du matériau 3 non magnétique. Ce matériau peut être du verre dont le point de fusion est situé vers 500 à 600°C.

La structure obtenue peut avoir la configuration représentée en figure 5 si le verre a été déposé uniquement dans chaque rainure. Elle peut également avoir la configuration représentée en figure 6 si l'ensemble a fait l'objet d'un dépôt de verre.

Au cours d'une quatrième étape, un usinage suivi d'un polissage est réalisé du côté de la face 10 de façon à enlever le matériau de la couche 2 (Sendust) et le matériau (3) verre situé sur la face 10 et non compris dans l'encoche 11. On obtient ainsi la structure représentée en figure 7.

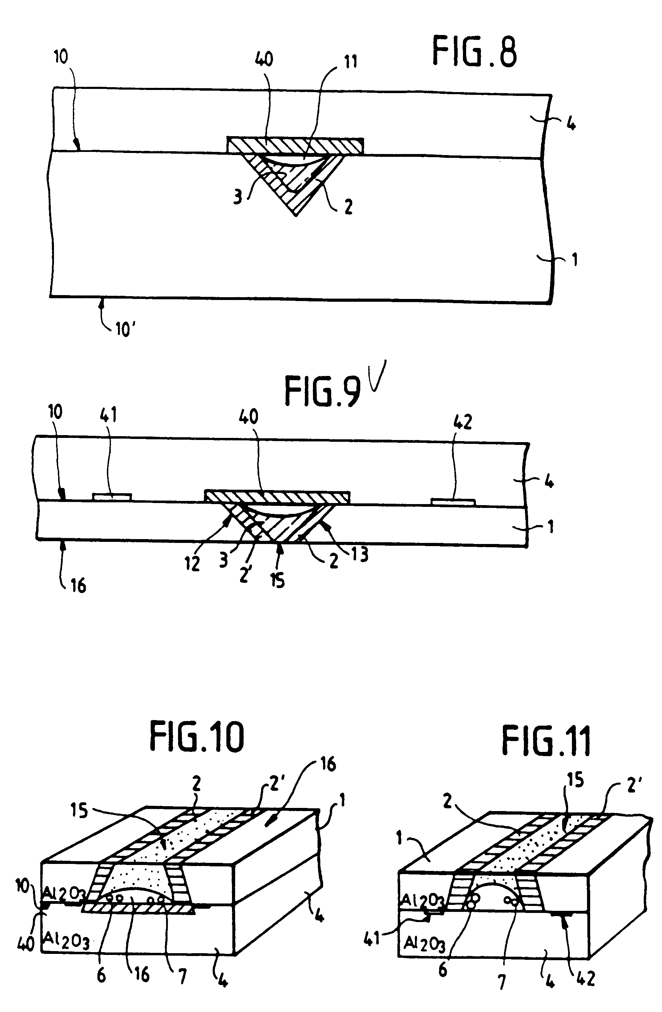

Au cours d'une cinquième étape représentée en figure 8, une pièce 4 portant une couche 40 d'un matériau magnétique est collée à la face 10 du substrat. Le collage peut se faire à l'aide de points de colle 41, 42 en verre fondu par exemple. Si la couche 40 ne recouvre pas toute la surface de la pièce 4, ce qui est le cas de la figure 8, il faut, au moins, qu'à chaque encoche 11 ayant fait l'objet d'un traitement précédent, corresponde une couche de matériau magnétique 40. Selon un exemple de réalisation préféré de l'invention, la couche 40 est en Sendust et a environ 10 à 50 micromètres d'épaisseur, mais selon une variante de réalisation, la pièce 4 peut être elle-même en matériau magnétique (ferrite) et ne comporte pas alors de couche 40.

Au cours d'une sixième étape représentée en figure 9, la face 10′ du substrat 1 opposée à la face 10 est usinée et polie jusqu'à atteindre le matériau 3 non magnétique. Le matériau 2, situé sur les flancs latéraux 12 et 13 de l'encoche, est séparé en deux parties 2, 2′ par un entrefer 15. A titre d'exemple, la largeur de l'entrefer 15 a une largeur d'environ quelques micromètres. On a ainsi réalisé le circuit magnétique de la tête magnétique la face 16 comportant deux pôles magnétique séparés par un entrefer 15. Pour compléter la tête magnétique on loge entre le matériau 3 et la pièce 4 des conducteurs de bobinage 6 et 7.

La structure représentée en figure 11 est une variante de celle de la figure 10, selon laquelle, la pièce 4 est en matériau magnétique et ne comporte pas alors de couche 40 en matériau magnétique.

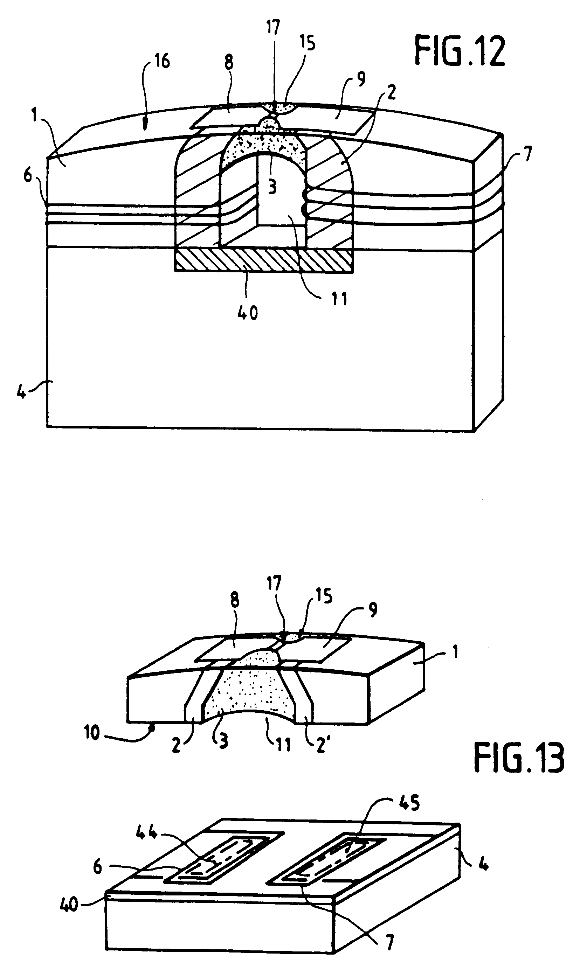

La figure 12 représente une tête magnétique réalisée selon l'invention. On retrouve sur cette figure, le substrat 1 dans lequel on a réalisé une encoche 11 couverte intérieurement d'une couche 2 en matériau magnétique. Cette encoche est partiellement remplie d'un matériau non magnétique 3, en verre par exemple, qui affleure la face 16 de la tête magnétique. Le circuit magnétique est complété par une pièce 4 portant une couche 40 d'un matériau magnétique. Des bobinages 6 et 7 ont été bobinés autour des couches 2 et 2′ en passant par l'encoche 11.

L'entrefer 15 réalisé par le matériau 3 a pour largeur quelques micromètres, voire quelques dizaines de micromètres.

Sur la face 16 sont réalisés deux pôles magnétiques 8 et 9 en couches minces situés chacun au dessus du matériau 2, 2′ d'une paroi de l'encoche 11. Les deux pôles 8 et 9 sont séparés par un entrefer 17.

Cet entrefer 17 réalisé entre les deux pôles en couches minces 8 et 9 peut avoir une largeur calibrée selon les techniques de réalisation connues telles que décrites dans la demande de brevet français n° 86 14974.

La figure 13 représente, en vue éclatée, une variante de réalisation de la tête magnétique selon l'invention.

Selon cette variante, les bobinages 6 et 7 sont réalisés, par microlitographie par exemple, sur la face de la pièce 4 qui doit être collée à la face 10 du substrat 1. Sur cette pièce 4, les zones 44 et 45 dessinées en traits mixtes représentent les zones où doivent s'appliquer les couches 2 et 2′ des flancs latéraux de l'encoche 11. Les circuits des bobines 6 et 7 sont réalisés sous forme plane autour des zones 44 et 45 et présentent des connexions permettant d'être reliées par des moyens non représentés à des circuits extérieurs. Ces bobinages 6 et 7 peuvent être isolés par une couche isolante de la couche 40 en matériau magnétique.

L'invention permet ainsi de réaliser une tête magnétique dont la longueur du circuit magnétique peut être réduite ce qui réduit les fuites.

Le matériau du circuit magnétique (couche 2 et couche 40) a des caractéristiques de perméabilité et de champ coercitif qui peuvent être bien meilleurs à haute fréquence qu'avec un matériau en ferrite. C'est ainsi qu'avec du Sendust on peut obtenir des perméabilités magnétiques de 1000 à 20 MHz, 800 à 50 MHz et 500 à 100 MHz, voire des caractéristiques magnétiques encore meilleures en prévoyant un circuit magnétique en Sendust feuilleté, tandis qu'avec un matériau en ferrite au delà de 50 MHz, on obtient des caractéristiques de perméabilité qui sont difficilement exploitables.

De plus le substrat 1 peut être en matériau dur qui, constituant le corps de la tête, résiste mieux à l'abrasion d'une bande qu'un corps en ferrite.

La surface 16 de la tête peut être recouverte d'une couche d'accrochage (TiC) et d'un matériau anti-usure tel qu'un matériau à la base de carbone.

Enfin, le matériau magnétique constituant le circuit de fermeture des lignes de champ peut être recuit à une température compatible avec le substrat mais totalement déconnecté des contingences dues au verre ou au bobinage. Par exemple, le substrat 1 peut être en Al₂ O₃ et le matériau magnétique en Sendust recuit à 650 ou 700° C.

La tête magnétique de l'invention se prête à une fabrication collective. En effet, sur une même rainure 11, plusieurs têtes magnétiques peuvent être réalisées et on découpe ensuite les têtes perpendiculairement à la rainure. De plus, dans le même substrat 1, plusieurs rainures peuvent être réalisées. Dans ce cas, à l'issue du procédé précédemment décrit on découpe le substrat entre les rainures, parallèlement à celles-ci. On peut donc réaliser également une surface de têtes magnétiques et réaliser ensuite les deux types de découpes.

## Revendications

1. Procédé de réalisation d'un circuit magnétique pour tête magnétique d'enregistrement-lecture comportant les étapes suivantes:
a) réalisation dans un substrat (1) en matériau non magnétique à partir d'une première face (10) du substrat, d'une encoche (11) possédant deux flancs latéraux (12, 13) et un fond (14);
b) réalisation dans l'encoche d'une couche (2) d'un matériau de bonne perméabilité magnétique recouvrant les deux flancs latéraux (12, 13) et le fond (14) de l'encoche (11);
c) dépôt d'un matériau amagnétique (3) dans l'encoche (11);
d) usinage d'une deuxième face (16) du substrat opposée à la première face (10) de façon à atteindre le matériau amagnétique (3) situé dans l'encoche (11) et à créer un entrefer (15) entre les couches de matériau magnétique (2, 2′) situées sur les deux flancs latéraux (12, 13) ;
e) collage d'un élément (4, 40) en matériau magnétique contre la première face (10) du substrat (1) de telle façon que cet élément (40) de matériau magnétique couple magnétiquement les couches (2, 2′) de matériau magnétique situées sur les deux flancs latéraux (12, 13) de l'encoche (11);
caractérisé en ce qu'il comporte également après usinage de la deuxième face (16) du substrat (1), la réalisation de deux pôles (8, 9) en matériau magnétique en couches minces séparés par un entrefer (17) situé au-dessus de l'entrefer (15) séparant les deux couches (2, 2′) de matériau magnétique de bonne perméabilité situées sur les deux flancs latéraux (12, 13), chaque pôle magnétique (8, 9) étant couplé magnétiquement à une couche (2, 2′) en matériau de bonne perméabilité (2, 2′) située sur l'un des flancs latéraux (12, 13).

2. Procédé selon la revendication 1 appliqué à la réalisation d'une tête magnétique, caractérisé en ce que le matériau amagnétique (3) ne remplit pas toute l'encoche (11) et qu'après collage dudit élément (4, 40) en matériau magnétique, on réalise, dans l'espace laissé libre entre le matériau amagnétique et ledit élément (4, 40) en matériau magnétique, au moins un bobinage à l'aide de conducteurs (6, 7).

3. Procédé selon la revendication 1 appliqué à la réalisation d'une tête magnétique, caractérisé en ce qu'avant le collage dudit élément (4, 40) en matériau magnétique, on réalise sur cette pièce (4) au moins un bobinage plan isolé du matériau magnétique et entourant une zone de contact des couches (2, 2′) de matériau magnétique avec ledit élément (4, 40) en matériau magnétique.

4. Procédé selon la revendication 1, caractérisé en ce que la couche (2) en matériau de bonne perméabilité magnétique réalisée dans l'encoche (11) est réalisée sous forme d'une alternance de couches d'un matériau à croissance colonnaire et de couches d'un matériau de structure cristalline différente.

5. Procédé selon la revendication 1, caractérisé en ce que l'étape de collage de l'élément (4, 40) en matériau magnétique contre la première face (10) du substrat (1) peut être faite avant l'étape d'usinage de la deuxième face (10′) du substrat.

6. Procédé selon la revendication 1, caractérisé en ce que la couche (2) de matériau de bonne perméabilité magnétique recouvre également la face (10) et que la réalisation de cette couche est suivie d'un usinage permettant d'enlever le matériau de bonne perméabilité magnétique non situé dans l'encoche (11).

7. Procédé selon la revendication 6, caractérisé en ce qu'après la réalisation de la couche (2) de matériau de bonne perméabilité magnétique on réalise une couche d'un matériau non magnétique remplissant l'encoche (11), ces deux couches étant ensuite usinées.

8. Procédé selon la revendication 1, caractérisé en ce que plusieurs encoches (11) sont réalisées : dans un même substrat les différentes étapes du procédé sont appliquées à ces différentes encoches.

9. Procédé selon la revendication 1, caractérisé en ce que l'élément (4, 40) en matériau magnétique est une couche (40) de matériau magnétique portée par une pièce (4) ou bien une pièce (4) en matériau magnétique.

10. Procédé selon la revendication 1, caractérisé en ce que le substrat (1) est en matériau dur résistant mieux à l'abrasion qu'un matériau en ferrite.

11. Tête magnétique susceptible d'être réalisée par le procédé selon l'une quelconque des revendications précédentes, comportant:
- un substrat (1) en matériau non magnétique possédant une fente (11) possédant une ouverture de grande dimension vers une première face (10) du substrat, et une deuxième ouverture de faible largeur vers une deuxième face (16) du substrat, cette fente étant délimitée par deux flancs latéraux (12, 13) ;
- des couches (2, 2′) d'un matériau à perméabilité magnétique élevée, recouvrant les deux flancs latéraux (12, 13) et affleurant lesdites première et deuxième faces (10, 16) du substrat (1) de façon notamment à ne recouvrir ni la première ni la deuxième face;
- un matériau non magnétique (3) situé entre les couches (2, 2′) de matériau à grande perméabilité magnétique recouvrant les flancs (12, 13), ce matériau non magnétique (3) affleurant la deuxième face (16) du substrat (1);
- un élément (4, 40) en matériau magnétique plaqué contre ladite première face (10) et couplant magnétiquement les deux couches (2, 2′) de matériau à perméabilité magnétique élevée;
- au moins un bobinage (6, 7) compris entre le matériau non magnétique (3) et l'élément (4, 40) en matériau magnétique;
- deux pôles magnétiques (8, 9) en couches minces situés sur la deuxième face (16) au-dessus des couches (2, 2′) de matériau à perméabilité magnétique élevée, les deux pôles (8, 9) étant séparés par un entrefer (17) et chaque pôle (8, 9) étant couplé magnétiquement à l'une des deux couches (2, 2′) de matériau à perméabilité magnétique élevée.

12. Tête magnétique selon la revendication 11, caractérisé en ce que le substrat (1) est en matériau dur résistant mieux à l'abrasion qu'un matériau en ferrite.

## Patentansprüche

1. Verfahren zur Herstellung eines Magnetkreises für einen magnetischen Schreib-Lesekopf, das folgende Verfahrensschritte enthält:
a) Herstellung einer Nut (11) auf einer ersten Seite (10) eines Substrats (1) aus unmagnetischem Material, wobei die Nut (11) zwei seitliche Flanken (12, 13) und einen Grund (14) besitzt;
b) Ausbildung einer Schicht (2) aus einem Material mit hoher magnetischer Permeabilität in der Nut, wobei diese Schicht die beiden Seitenflanken (12, 13) und den Grund (14) der Nut (11) bedeckt;
c) Aufbringen einer unmagnetischen Schicht (3) in der Nut (11);
d) Abtragen einer der ersten Seite (10) des Substrats gegenüberliegenden Seite (16), bis das unmagnetische Material (3) in der Nut (11) zutagetritt und einen Magnetspalt (15) zwischen den Schichten aus magnetischem Material (2, 2′) bildet, die die beiden Seitenflanken (12, 13) der Nut bedecken;
e) Aufkleben eines Elements (4, 40) aus magnetischem Material auf die erste Seite (10) des Substrats (1), so daß dieses Element (40) aus magnetischem Material die Schichten (2, 2′) aus magnetischem Material miteinander koppelt, die die beiden Seitenflanken (12, 13) der Nut (11) bedecken;
dadurch gekennzeichnet, daß weiter nach dem Abtragen der zweiten Seite (16) des Substrats (1) zwei Pole (8, 9) aus magnetischem Material in Form dünner Schichten aufgebracht werden, die durch einen Magnetspalt (17) oberhalb des Magnetspalts (15) zwischen den beiden Schichten (2, 2′) aus magnetischem Material hoher Permeabilität auf den beiden Seitenflanken (12, 13) voneinander getrennt sind, wobei jeder Magnetpol (8, 9) magnetisch mit einer der Schichten (2, 2′) aus einem Material mit hoher Permeabilität gekoppelt ist, die eine der seitlichen Flanken (12, 13) der Nut bedeckt.

2. Verfahren nach Anspruch 1 in Anwendung auf die Herstellung eines Magnetkopfs, dadurch gekennzeichnet, daß das unmagnetische Material (3) nicht die ganze Nut (11) füllt und daß nach dem Aufkleben des Elements (4, 40) aus magnetischem Material mindestens eine Wicklung mit Hilfe von Leitern (6, 7) in dem zwischen dem unmagnetischen Material und dem Element (4, 40) aus magnetischem Material freigelassenen Raum ausgebildet wird.

3. Verfahren nach Anspruch 1 in Anwendung auf die Herstellung eines Magnetkopfs, dadurch gekennzeichnet, daß vor dem Aufkleben des Elements (4, 40) aus magnetischem Material auf diesem Element mindestens eine gegenüber dem Magnetmaterial isolierte Flachspule hergestellt wird, die eine Kontaktzone der Schichten (2, 2′) aus magnetischem Material mit dem Element (4, 40) aus magnetischem Material umgibt.

4. Verfahren nach Anspruch 1, dadurch gekennzeichnet, daß die Schicht (2) aus einem Material mit hoher Permeabilität, die in den Nuten (11) ausgebildet wird, durch abwechselndes Aufbringen von Schichten aus einem Material mit Säulenwachstum und Schichten aus einem Material mit einer anderen kristallinen Struktur hergestellt wird.

5. Verfahren nach Anspruch 1, dadurch gekennzeichnet, daß der Schritt des Aufklebens des Elements (4, 40) aus magnetischem Material auf die erste Seite (10) des Substrats (1) vor dem Verfahrensschritt des Abtragens der zweiten Seite (10′) des Substrats erfolgen kann.

6. Verfahren nach Anspruch 1, dadurch gekennzeichnet, daß die Schicht (2) aus einem Material mit hoher magnetischer Permeabilität auch die erste Seite (10) bedeckt und daß nach der Herstellung dieser Schicht das Material mit hoher magnetischer Permeabilität außerhalb des Bereichs der Nut (11) abgetragen wird.

7. Verfahren nach Anspruch 6, dadurch gekennzeichnet, daß nach der Herstellung der Schicht (2) aus einem Material mit hoher magnetischer Permeabilität eine Schicht aus unmagnetischem Material aufgebracht wird, die die Nut (11) füllt, worauf diese beiden Schichten dann abgetragen werden.

8. Verfahren nach Anspruch 1, dadurch gekennzeichnet, daß mehrere Nuten (11) in einem gemeinsamen Substrat hergestellt werden und daß die verschiedenen Verfahrensschritte auf diese verschiedenen Nuten angewandt werden.

9. Verfahren nach Anspruch 1, dadurch gekennzeichnet, daß das Element (4, 40) aus magnetischem Material eine von einem Bauteil (4) getragene Schicht (40) aus magnetischem Material oder ein Bauteil (4) aus magnetischem Material ist.

10. Verfahren nach Anspruch 1, dadurch gekennzeichnet, daß das Substrat (1) aus einem harten Material besteht, das gegen Abrieb widerstandsfähiger als ein Ferritmaterial ist.

11. Magnetkopf, der nach dem Verfahren gemäß einem beliebigen der vorhergehenden Ansprüche hergestellt werden kann und aufweist:
- ein Substrat (1) aus unmagnetischem Material mit einem Schlitz (11), der eine größere Öffnung in Richtung einer ersten Seite (10) des Substrats und eine zweite, schmalere Öffnung in Richtung auf eine zweite Seite (16) des Substrats besitzt und durch zwei Seitenflanken (12, 13) begrenzt ist,
- Schichten (2, 2′) aus einem Material mit hoher magnetischer Permeabilität, die die beiden Seitenflanken (12, 13) bedecken und bis in Höhe der ersten und der zweiten Seite (10, 16) des Substrats (1) reichen, ohne aber insbesondere die erste oder die zweite Seite zu bedecken,
- ein unmagnetisches Material (3), das zwischen den die Flanken (12, 13) bedeckenden Schichten (2, 2′) aus Material mit einer hohen magnetischen Permeabilität liegt und bis zur zweiten Seite (16) des Substrats (1) reicht,
- ein Element (4, 40) aus magnetischem Material, das auf die erste Seite (10) aufgelegt wird und magnetisch die beiden Schichten (2, 2′) aus Material mit hoher magnetischer Permeabilität miteinander koppelt,
- mindestens eine Spule (6, 7), die sich zwischen dem unmagnetischen Material (3) und dem Element (4, 40) aus magnetischem Material befindet,
- zwei Magnetpole (8, 9) aus dünnen Schichten, die auf die zweite Seite (16) oberhalb der Schichten (2, 2′) aus Material mit hoher magnetischer Permeabilität aufgebracht sind und durch einen Magnetspalt (17) voneinander getrennt sind, wobei jeder Pol (8, 9) magnetisch mit einer der beiden Schichten (2, 2′) aus einem Material mit hoher magnetischer Permeabilität gekoppelt ist.

12. Magnetkopf nach Anspruch 11, dadurch gekennzeichnet, daß das Substrat (1) aus einem harten Material besteht, das besser als ein Ferritmaterial dem Abrieb widersteht.

## Claims

1. Method for the production of a magnetic circuit for a record/read magnetic head comprising the following steps:
(a) the production in a substrate (1) made of non-magnetic material, from a first face (10) of the substrate, of a groove (11) possessing two side walls (12, 13) and a bottom (14);
(b) the production in the groove of a layer (2) of a material with good magnetic permeability covering the two side walls (12, 13) and the bottom (14) of the groove (11);
(c) the deposition of a non-magnetic material (3) in the groove (11);
(d) the machining of a second face (16) of the substrate opposite to the first face (10) so as to reach the non-magnetic material (3) located in the groove (11) and to create an air gap (15) between the layers (2, 2′) of magnetic material which are located on the two side walls (12, 13);
(e) the bonding of a part (4, 40) made of magnetic material against the first face (10) of the substrate (1) in such a way that this part (40) of magnetic material magnetically couples the layers (2, 2′) of magnetic material which are located on the two side walls (12, 13) of the groove (11);
characterized in that it also comprises, after the machining of the second face (16) of the substrate (1), the production of two poles (8, 9) made of thin-film magnetic material separated by an air gap (17) located above the air gap (15) separating the two layers (2, 2′) of magnetic material with good permeability which are located on the two side walls (12, 13), each magnetic pole (8, 9) being magnetically coupled to one layer (2, 2′) made of material with good permeability (2, 2′) which is located on one of the side walls (12, 13).

2. Method according to Claim 1, applied to the production of a magnetic head, characterized in that the non-magnetic material (3) does not fill the whole groove (11) and that, after bonding of the said part (4, 40) made of magnetic material, at least one coil is produced in the space left free between the non-magnetic material and the said part (4, 40) made of magnetic material, using conductors (6, 7).

3. Method according to Claim 1, applied to the production of a magnetic head, characterized in that, before the bonding of the said part (4, 40) made of magnetic material, at least one plane coil is produced on this part (4), this plane coil being insulated from the magnetic material and surrounding a zone of contact of the layers (2, 2′) of magnetic material with the said part (4, 40) of magnetic material.

4. Method according to Claim 1, characterized in that the layer (2) made of material with good magnetic permeability produced in the groove (11) is produced in the form of an alternation of layers of a material with columnar growth and layers of a material with a different crystal structure.

5. Method according to Claim 1, characterized in that the step of bonding of the part (4, 40) made of magnetic material against the first face (10) of the substrate (1) may be performed before the step of machining the second face (10′) of the substrate.

6. Method according to Claim 1, characterized in that the layer (2) of material with good magnetic permeability also covers the face (10) and in that the production of this layer is followed by machining making it possible to remove the material with good magnetic permeability not situated in the groove (11).

7. Method according to Claim 6, characterized in that, after the production of the layer (2) of material with good magnetic permeability, a layer of a non-magnetic material is produced, filling the groove (11), these two layers then being machined.

8. Method according to Claim 1, characterized in that several grooves (11) are produced; in the same substrate, the various steps of the method are applied to these various grooves.

9. Method according to Claim 1, characterized in that the part (4, 40) made of magnetic material is a layer (40) of magnetic material carried by a part (4) or alternatively a part (4) made of magnetic material.

10. Method according to Claim 1, characterized in that the substrate (1) is made of hard material having a higher abrasion resistance than a ferrite material.

11. Magnetic head capable of being produced by the method according to any one of the preceding claims, comprising:
- a substrate (1) made of non-magnetic material possessing a slit (11) which has a wide opening towards a first face (10) of the substrate, and a second, narrow, opening towards a second face (16) of the substrate, this slit being bounded by two side walls (12, 13);
- layers (2, 2′) of a material with high magnetic permeability covering the two side walls (12, 13) and flush with the said first and second faces (10, 16) of the substrate (1) especially so as to cover neither the first nor the second face;
- a non-magnetic material (3) located between the layers (2, 2′) of the high magnetic permeability material covering the sides (12, 13), this non-magnetic material (3) being flush with the second face (16) of the substrate (1);
- a part (4, 40) made of magnetic material pressed against the said first face (10) and magnetically coupling the two layers (2, 2′) of high magnetic permeability material;
- at least one coil (6, 7) lying between the non-magnetic material (3) and the part (4, 40) made of magnetic material;
- two thin-film magnetic poles (8, 9) located on the second face (16) above the layers (2, 2′) of high magnetic permeability material, the two poles (8, 9) being separated by an air gap (17) and each pole (8, 9) being magnetically coupled to one of the two layers (2, 2′) of high magnetic permeability material.

12. Magnetic head according to Claim 11, characterized in that the substrate (1) is made of hard material having a higher abrasion resistance than a ferrite material.
